# EUROPEAN PATENT APPLICATION

(11) **EP 2 460 773 A1**
(43) Date of publication of application: **06.06.2012**
(21) Application number: 10804340.7
(22) Date of filing: 23.07.2010
(51) Int. Cl.: C03B 3/02, C03B 5/04, C03B 5/235, F27B 3/18, F27B 3/20, F27D 3/10

(54) **GLASS MELTING FURNACE, PROCESS FOR PRODUCING MOLTEN GLASS, APPARATUS FOR PRODUCING GLASS PRODUCT, AND PROCESS FOR PRODUCING GLASS PRODUCT**

(30) Priority: 27.07.2009 JP 2009174324
(71) Applicant: Asahi Glass Company, Limited, Tokyo 100-8405 (JP)
(72) Inventor: SAKAMOTO, Osamu, Tokyo 100-8405 (JP); TANAKA, Chikao, Tokyo 100-8405 (JP); MIYAZAKI, Seiji, Tokyo 100-8405 (JP); OHKAWA, Satoru, Tokyo 100-8405 (JP)
(74) Representative: Müller-Boré & Partner Patentanwälte
(86) International application number: PCT/JP2010/062464
(87) International publication number: WO 2011/013594

(57) **Abstract**

The present invention provides a glass-melting furnace etc which can maintain homogeneity of molten glass in an apparatus and a process for producing molten glass by melting glass raw material particles and glass cullet pieces.

In the present invention, glass raw material particles are dropped from a glass raw material particle heating unit 14 constituted by oxygen combustion burners 34, 34··· and a glass raw material particle feed portion, and the glass raw material particles are changed into liquid glass particles 38, 38··· in high-temperature gas phases produced by flames 32, 32··· of oxygen combustion burners 34, 34···. In the step of heating and melting the glass raw material particles, glass cullet pieces 30, 30··· are feed by an feed means 40 of a glass cullet piece feed portion 12 so as to be spread radially toward the plurality of flames 32, 32··· around the feed portion.

## Description

### TECHNICAL FIELD

The present invention relates to a glass-melting furnace for producing molten glass by producing liquid glass particles from glass raw material particles in a high temperature gas phase atmosphere; a process for producing molten glass by using the glass-melting furnace; an apparatus for producing glass products employing the glass-melting furnace; and a process for producing glass products using the above process.

### BACKGROUND ART

Patent Documents 1 and 2 each discloses as a glass-melting furnace for melting glass raw material particles in a high temperature gas phase atmosphere and accumulating them to produce molten glass, a glass-melting furnace having a glass raw material particle feed portion and a heating means for forming a high temperature gas phase atmosphere for melting the glass raw material particles in the ceiling portion of the glass-melting furnace.

This glass-melting furnace is an apparatus for melting glass raw material particles, that are fed from the glass raw material feed portion into the inside of the furnace, in a high temperature gas phase atmosphere heated by a heating means, to produce liquid glass particles, accumulating the liquid glass particles in a bottom portion of the glass-melting furnace to form molten glass liquid, temporarily storing the molten glass liquid in the bottom portion of the glass-melting furnace, and discharging the molten glass liquid. Further, such a production process of molten glass is known as in-flight glass melting method. In this in-flight glass melting method, as compared with a conventional melting method using a Siemens type furnace, it is possible to reduce consumption energy in glass-melting step to be about one third to produce molten glass in a short time, and accordingly, it is possible to downsize a melting furnace, curtail a regenerator, improve quality, reduce CO₂ and to shorten a time for changing glass type. Such an in-flight glass melting method of glass attracts attention as a technique for saving energy.

By the way, as the glass raw material particles feed from the glass-raw material feed portion, those having a particle size of at most 1 mm, are commonly employed. Each particle of the glass raw material particles feed into the glass-melting furnace is melted to be a liquid glass particle while it falls (flies) in a high temperature gas phase atmosphere, and such liquid glass particles fall downwardly and are accumulated on the bottom portion of the glass-melting furnace to form a molten glass liquid. The liquid glass particles produced from the glass raw material particles may be expressed as drops of molten glass. In order to produce the liquid glass particles from the glass raw material particles in the high temperature gas phase atmosphere in a short time, the particle size of the glass raw material particles has to be small as described above. Further, usually, each liquid glass particle produced from each glass raw material particle needs to be a particle having substantially the same glass composition.

Almost all of decomposed gas components, that are generated when the glass raw material particles become liquid glass particles, are discharged to the outside of the molten glass particles without being contained in the molten glass particles since both of the glass raw material particles and the liquid glass particles are small particles. Accordingly, there is little risk that bubbles are generated in the molten glass liquid produced by accumulating the liquid glass particles.

Meanwhile, the glass raw material particles are particles having substantially uniform components, and glass compositions of liquid glass particles produced from the glass raw material particles are uniform from one another. Since the difference of glass composition among the liquid glass particles is small, there is little risk that glass composition varies between portions of molten glass liquid produced by accumulation of a large number of the liquid glass particles. Accordingly, a homogenizing means for homogenizing the glass composition in molten glass liquid, that has been required in conventional glass-melting furnaces, is scarcely required in in-flight glass melting method. Even if a small amount of liquid glass particles are different from the rest of liquid glass particles in the glass composition, since the molten glass particles are small in the particle size, an inhomogeneous region of molten glass liquid, that is produced from the small amount of molten glass particles having different glass composition, is small and such a region is easily homogenized and disappears in a short time. Thus, with the in-flight glass melting method, it is possible to reduce heat energy required to homogenize molten glass liquid and to shorten a time required for homogenization.

The heating means of Patent Documents 1 and 2 each has a plurality of arc electrodes and/or oxygen combustion nozzles as heating means for forming a high-temperature gas phase atmosphere, and a high-temperature gas phase atmosphere of at least 1,600°C is formed in the furnace by a thermal plasma arc formed by the plurality of arc electrodes and/or oxygen combustion flames formed by the oxygen combustion nozzles. By feeding glass raw material particles into the high-temperature gas phase atmosphere, the glass raw material particles are changed to liquid glass particles in the high temperature gas phase atmosphere.

The molten glass of about 1,600°C produced by the glass-melting furnace of Patent Document 1 or 2 is supplied from the glass-melting furnace to a temperature conditioning vessel or a refining vessel, and is cooled to a temperature at which the glass can be formed (about 1,000°C in a case of soda lime glass). Then, this molten glass is supplied to a forming means of glass products such as a float bath, a fusion forming machine, a roll out forming machine, a blow forming machine or a press molding machine, and formed into glass products having various shapes. Then, the formed glass products are cooled approximately to a room temperature by an annealing means, and thereafter, subjected to a cutting step by a cutting means and/or other back-end steps as the case requires, to be fabricated into desired glass products.

By the way, in the production of molten glass, it is essential to use glass cullet pieces besides glass raw material. Accordingly, in order to practically use the in-flight glass melting method, an apparatus which can use together with glass cullet pieces is required.

For this reason, Patent Document 1 discloses a production process of molten glass, which is a process of pulverizing glass cullet pieces into particles having a particle size of within 0.1 mm or pulverizing them into particles having a particle size of within 0.05 mm, passing these particles through a high temperature gas phase atmosphere together with glass raw material particles, and accumulating them to obtain a molten glass liquid. Further, Patent Document 1 discloses a process of preliminarily heating glass cullet pieces, that have been preliminarily pulverized into an external size of about 1 mm, to about 700°C in another place, directly feeding the glass cullet pieces into a molten glass, and heating the mixture.

Likewise, Patent Document 2 discloses a production process of molten glass, which is a process of pulverizing glass cullet pieces into particles having a particle size of within 5 µm, passing these particles through a high temperature gas phase atmosphere together with glass raw material particles, and accumulating them to obtain a molten glass liquid. Further, Patent Document 2 discloses a process of preliminarily heating glass cullet pieces, that have been preliminarily pulverized into an external size of about 5 mm, to about 700°C in another place, directly feeding the glass cullet pieces into a molten glass, and heating the mixture.

### PRIOR ART DOCUMENTS

### PATENT DOCUMENTS

Patent Document 1: JP-A-2006-199549
Patent Document 2: JP-A-2007-297239

### DISCLOSURE OF INVENTION

### TECHNICAL PROBLEM

In the production processes of molten glass of Patent Documents 1 and 2 disclosing melting techniques using glass raw material particles and glass cullet pieces in combination, regardless of presence or absence of preliminary heating, a problem that a molten glass already melted in a melting furnace and glass cullet pieces fed into the furnace are not easily mixed uniformly. This is because the size of each particle of glass raw material particles is at most about a few hundreds of microns, and the size of the cullets range from a small size of a few millimeter to a large size of a few centimeter order, and accordingly, due to the size difference, a molten glass made of melted glass raw material particles may be slightly different in the quality from a molten glass made of melted glass cullet pieces since they are slightly different in thermal history. This problem is important for glass products to which high external appearance quality or high optical quality is required.

However, Patent Documents 1 and 2 are silent as to measures against the risk of deterioration of homogeneity of molten glass in a case of employing glass cullet pieces.

The present invention has been made under the circumstances, and it is an object of the present invention to provide a glass-melting furnace, a process for producing molten glass, an apparatus for producing molten glass and a process for producing glass products, which can maintain homogeneity of molten glass in a process for producing molten glass which comprises changing glass raw material particles into liquid glass particles in a high temperature gas phase atmosphere, changing glass cullet pieces into glass particles at least a surface of which is liquefied, and accumulating these glass particles in a furnace bottom to obtain a molten glass liquid.

### SOLUTION TO PROBLEM

In order to achieve the above object, the present invention provides a glass-melting furnace for changing glass raw material particles into liquid glass particles in a gas phase atmosphere in the glass-melting furnace, accumulating the liquid glass particles in a bottom portion of the glass-melting furnace to obtain a molten glass liquid and discharging the molten glass liquid;
the glass-melting furnace comprising a glass cullet piece feed portion disposed so as to penetrate through a ceiling portion of the glass-melting furnace;
a plurality of glass raw material particle feed portions disposed around the glass cullet piece feed portion in plan view so as to be disposed downwardly from a furnace wall portion in an upper portion of the glass-melting furnace;
a heating means provided for each of the plurality of glass raw material particle feed portions and for forming a gas phase portion under the glass raw material particle feed portion to change the glass raw material particles into liquid glass particles;
a furnace bottom portion for accumulating the liquid glass particles to form a molten glass liquid; and
a discharge portion for discharging the molten glass liquid;
wherein the glass cullet piece feed portion includes a feed means for feeding the glass cullet pieces so as to spread the pieces radially toward the gas phase portion.

Further, in order to achieve the above object, the present invention provides a process for producing molten glass, which is a process for producing a molten glass by employing the glass-melting furnace of the present invention.

In the present invention, glass raw material particles are melted in a high-temperature gas phase portion formed under a glass raw material particle feed portion, to be liquid glass particles. The gas phase portion for changing the glass raw material particles into the liquid glass particles is formed under the glass raw material particle feed portion by a heating means. The heating means is an oxygen combustion burner or a multi-phase arc plasma generation apparatus, and a high temperature gas phase portion formed by the heating means is a flame in the case of oxygen combustion burner and a thermal plasma in the case of multi-phase arc plasma generation apparatus. The heating means is provided for each glass raw material particle feed portion, and under the glass raw material particle feed portions, respective high temperature gas phase portions are formed.

A gas phase portion formed by a heating means for changing glass raw material particles into liquid glass particles, is hereinafter also referred to as heating gas phase portion.

The glass cullet pieces are fed into the heating gas phase portion by a feed means of the glass cullet piece feed portion. A plurality of the glass raw material particle feed portions are disposed around the glass cullet piece feed portion in plan view, and a heating gas phase portion is formed under each glass raw material particle feed portion, and accordingly, the heating gas phase portions are not present right under the glass cullet feed portion but present at positions obliquely below the portion, and a plurality of such heating gas phase portions are present under the surroundings of the glass cullet piece feed portion. In order to feed glass cullet pieces from the glass cullet piece feed portion toward such heating gas phase portions, the glass cullet piece feed portion has a feed means for spreading the glass cullet pieces radially toward the heating gas phase portions.

In the present invention, it is possible to sufficiently heat the glass cullet pieces in the heating gas phase portions and to preferably melt at least a part of the pieces. Namely, it is possible to melt a part (for example, a surface portion) or a whole of each glass cullet piece, or it is possible to melt at least some number of particles among a large number of glass cullet pieces. As the average of both of the malting states, the ratio of the volume of melted portion of the cullets to the volume of cullet pieces just after feeding, is hereinafter referred to as melt portion volume ratio. The present invention has a merit of increasing the melt portion volume ratio of the fed cullet pieces.

In-flight melting of glass raw material particles is carried out for each combination of glass raw material particle feed portion and heating means (hereinafter the combination is also referred to as glass raw material particle heating unit). Namely, in each glass raw material particle heating unit, from a glass raw material particle feed portion disposed downwardly from a furnace wall portion in the upper portion of a glass-melting furnace, glass raw material particles are fed into the heating gas phase portions, and the glass raw material particles falling in the heating gas phase portions are heated and melted to be liquid glass particles. The liquid glass particles produced in the heating gas phase portions fall onto a furnace bottom to be accumulated to form a molten glass liquid. In the present invention, a plurality of such glass raw material particle heating units are disposed around the glass cullet pieces feed portion in plan view.

Here, the furnace wall portion in the upper portion of a glass-melting furnace of the present invention means a ceiling portion and a portion within 1 m from an inner wall of the ceiling portion.

Meanwhile, glass cullet pieces feed into the heating gas phase portions formed under the glass raw material particle feed portions, are heated in the same manner as the glass raw material particles, preferably changed into particles at least a part of which is melted, fall onto the furnace bottom together with the liquid glass particles to be accumulated to form a molten glass liquid.

The liquid glass particles and the heated glass cullet pieces are mixed in the heating gas phase portions or a space under the portions. In this step, at least a part of the liquid glass particles may adhere to the heated glass cullet pieces to be integrated with the glass cullet pieces. Further, at least a part of the liquid glass particles may be integrated together to form larger liquid glass particles, and a part of the glass cullet pieces may be integrated together. Thus, when the liquid glass particles and the heated glass cullet pieces are mixed in e.g. the heating gas phase portions, fall and are accumulated to be molten glass liquid, the homogeneity of the mixture of them in the molten glass liquid improves.

Further, in the present invention, since the glass cullet pieces are fed so as to spread radially toward the heating gas phase portions, it is possible to distribute the cullet pieces to all of the plurality of heating gas phase portions present under the surrounding of the glass cullet piece feed portion. Furthermore, as compared with an usual case where the glass cullet pieces fall onto one concentrated portion, the position to which the glass cullet pieces fall is dispersed. Accordingly, when the glass cullet pieces have inhomogeneity to the entire molten glass liquid in the average glass composition or the temperature, etc., the inhomogeneity in the molten glass liquid is dispersed and the molten glass liquid is more quickly homogenized.

Further, in the present invention, it is preferred that the feed means has an feed tube and a guide member having a conical shape, the guide member being connected to a lower opening of the feed tube with a gap so that glass cullet pieces can pass through the gap and being disposed so that the apex of the guide member is on the upper side.

In the present invention, a cone-shaped guide member is provided in the glass raw material particle feed portion, whereby glass cullet pieces feed through a feed tube fall along a conical surface of the guide member and spread radially to enter into the heating gas phase portions. Accordingly, it is possible to supply the glass cullet pieces to the heating gas phase portions, and to prevent the heated glass cullet pieces from falling continuously to the same position, whereby the homogeneity of molten glass liquid improves.

Further, when the amount of glass cullet pieces feed into the furnace is large, it is preferred that the glass cullet pieces are fed intermittently. This is because when the amount of glass cullet pieces feed into the furnace is large, even if the glass cullet pieces are spread radially, the possibility that the heated glass cullet pieces continuously fall into the same position having a circular shape on a surface of molten glass increases, whereby the homogeneity of molten glass liquid may be deteriorated. By supplying the glass cullet pieces intermittently, even if the heated glass cullet pieces fall into the same position, the homogeneity of molten glass liquid is less likely deteriorated when they fall discontinuously in terms of time.

Further, in the present invention, it is preferred that the feed means has a feed tube having a feed port opening with a predetermined angle to the vertical direction, and a rotation means for rotating the feed tube around the vertical direction as the rotation axis.

In the present invention, the glass cullet pieces are fed through a feed port while the feed tube is rotated by a rotation means so that the glass cullet pieces spread radially, whereby it is possible to supply the glass cullet pieces to the heating gas phase portions sequentially. Further, it is also possible to feed the glass cullet pieces not continuously but so as to be spatially distributed, whereby the area to be fed each time can be limited. Namely, when the feed tube is rotated by the rotation means, the glass cullet pieces are supplied to a first heating gas phase portion facing to the feed port, and then, they are sequentially supplied to subsequent heating gas phase portions by the rotation of the feed tube. Accordingly, it is possible to sequentially supply the glass cullet pieces to every heating gas phase portions. At the same time, since the feed of the glass cullet pieces is spatially distributed, the glass cullet pieces are intermittently supplied to each heating gas phase portion. Accordingly, in the present invention, since it is possible to distribute the feed of glass cullet pieces spatially and to feed discontinuously, it is possible to prevent the melted glass cullet pieces from falling onto the same position continuously as described above, whereby it is possible to further improve the homogeneity. Further, by changing the rotation speed of the feed tube to thereby changing a centrifugal force applied to the glass cullet pieces, it is possible to further spread the falling positions of the glass cullet pieces.

Further, in the present invention, it is preferred that the plurality of glass raw material feed portions are disposed along a concentric circle around the glass cullet piece feed portion in plan view.

Further, in the present invention, it is preferred that the heating means is at least one of an oxygen combustion burner producing an oxygen combustion flame and a multi-phase arc plasma generation apparatus constituted by at least a pair of electrodes producing thermal plasma.

In the present invention, in a case of oxygen combustion flame by an oxygen combustion burner, a gas phase atmosphere having a high temperature of about 2,000°C can be formed, and in a case of thermal plasma, a gas phase atmosphere having a high temperature of from 5,000 to 20,000°C can be formed. Accordingly, it is possible to melt glass raw material particles falling through these gas phase atmospheres in a short time, and to sufficiently heat the glass cullet pieces. Here, the oxygen combustion burner and the multi-phase arc plasma generation apparatus may be each disposed alone or both of them may be employed in combination. Here, as the oxygen combustion burner to be used as the heating means, a burner integrated with the glass raw material feed portion may be employed.

Further, in order to achieve the above object, the present invention provides an apparatus for producing glass products, which comprises the glass-melting furnace of the present invention, a forming means for forming the molten glass disposed on the downstream side of the discharge portion of the glass-melting furnace, and an annealing means for annealing a formed glass.

Further, in order to achieve the above object, the present invention provides a process for producing glass products, which comprises a step of producing molten glass by the process for producing molten glass of the present invention, and a step of annealing a formed glass.

In the apparatus for producing glass products of the present invention and the process for producing glass products of the present invention, a molten glass is produced by employing the above glass-melting furnace of the present invention, the molten glass is formed by a forming means, and the formed glass is annealed by an annealing means to produce glass products.

### ADVANTAGEOUS EFFECT OF INVENTION

As described above, by the glass-melting furnace and the production process of molten glass of the present invention, it is possible to maintain homogeneity of molten glass even in a case of using glass cullet pieces.

Further, by the apparatus for producing glass products and the process for producing glass products of the present invention, by using the glass-melting furnace and the production process of the present invention, since it is possible to produce a molten glass while the homogeneity is maintained even in a case of using glass cullet pieces, it is possible to produce glass products having good quality.

### BRIEF DESCRIPTION OF DRAWINGS

Fig. 1 is a vertical cross-sectional view of a glass-melting furnace of a first embodiment constituting an apparatus for producing glass products of the present invention.
Fig. 2 is a substantial-part horizontal cross-sectional view of the glass-melting furnace shown in Fig. 1.
Fig. 3 is a substantial-part enlarged perspective view showing the structure of a feed tube of a glass cullet piece feed portion shown in Fig. 1.
Fig. 4 is a vertical cross-sectional view of a glass-melting furnace of a second embodiment constituting an apparatus for producing glass products of the present invention.
Fig. 5 is a substantial-part horizontal cross-sectional view of the glass-melting furnace shown in Fig. 4.
Fig. 6 is a flowchart showing an embodiment of a process for producing glass products of the embodiment.

### DESCRIPTION OF EMBODIMENTS

Now, with reference to attached drawings, preferred embodiments of the glass-melting furnace, the process for producing molten glass, the apparatus for producing glass products and the process for producing glass products of the present invention will be described.

In the illustrated glass-melting furnace, a heating means for forming a heating gas phase portion comprises an oxygen combustion burner. The heating gas phase portion is constituted by a flame of oxygen combustion burner and a high temperature portion in the vicinity of the flame.

A glass raw material particle feed portion for supplying glass raw material particles into the heating gas phase portion is integrated with the oxygen combustion burner, and in the vicinity of the outlet of the oxygen combustion burner, a tube for supplying combustion gas, a tube for supplying oxygen and a tube for supplying glass raw material particles are coaxially arranged. This combination of the glass raw material particle feed portion and the oxygen combustion burner, is referred to as glass raw material particle heating unit.

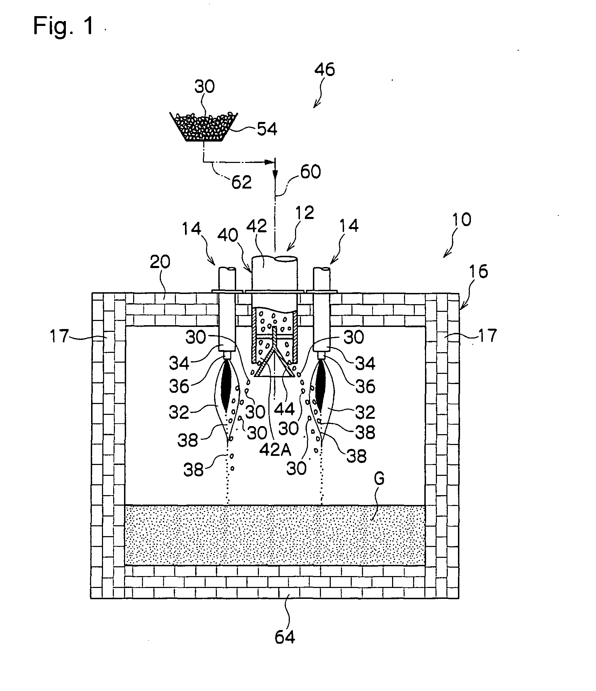

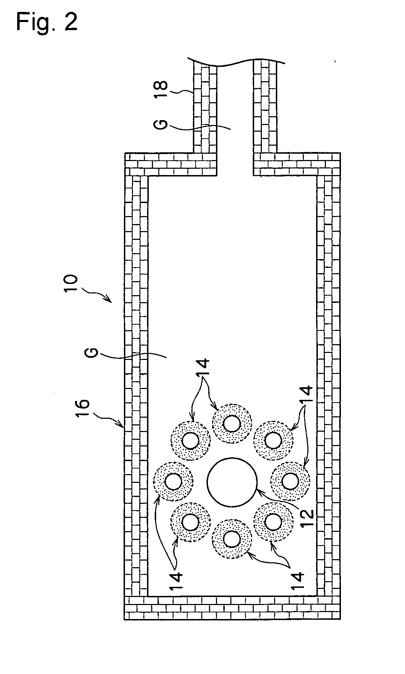

Fig. 1 is a vertical cross-sectional view of a glass-melting furnace 10 of a first embodiment constituting the glass-melting furnace of the present invention, and Fig. 2 is a substantial-part horizontal cross-sectional view of the glass-melting furnace 10 from which a ceiling portion is removed. Here, in Fig. 2, a glass cullet piece feed portion 12 and a glass raw material particle heating unit 14 to be described later are each indicated by a symbol ○ for simplification.

The glass-melting furnace 10 has a melting vessel 16 and an outlet 18, and the melting vessel 16 and the outlet 18 are constituted by known refractory bricks. Further, the melting vessel 16 has a cuboidal shape, and through its ceiling wall 20, a glass cullet piece feed portion 12 is attached perpendicularly, and around the glass cullet pieces feed portion 12, eight glass raw material particle heating units 14, 14... are disposed downwardly through the ceiling wall 20, to form high-temperature gas phase portions (that is, heating gas phase portions) for changing glass raw material particles into liquid glass particles in the furnace.

As shown in Fig. 2, eight glass raw material particle heating units 14, 14... are disposed on a concentric circle around the glass cullet piece feed portion 12 at equal interval. Here, a construction wherein the glass raw material particle heating unit 14 is not provided through the ceiling wall 20 but through a side wall 17 (refer to Fig. 1) in the upper portion of the melting vessel 16, is also within the scope of the present invention. In the case where the glass raw material particle heating unit 14 is provided through the side wall 17, the unit is provided at a height within 1 m in the vertical direction from an inner wall of the ceiling wall 20 of the melting vessel 16. This is because if the glass raw material heating unit 14 is provided at a position exceeding 1 m in the vertical direction from the inner wall of the ceiling wall 20 of the glass-melting vessel 16, the vertical distance from the molten glass liquid surface becomes so small that the angle of the glass raw material particle heating unit 14 to the horizontal direction becomes small, and accordingly, the glass raw material particles are blown against an opposed wall surface, whereby corrosion of the wall surface and contamination of glass caused by the corrosion occur. The glass raw material particle heating unit 14 is preferably provided at a height within 90 cm, more preferably at a height within 50 cm in the vertical direction from the inner wall of the ceiling portion 20 of the melting vessel 16.

Further, the number of glass raw material particle heating units 14 is not limited to eight, but so long as the unit can surround the glass cullet piece feed portion 12, the number is any number of at least two. Further, the arrangement of the glass raw material particle heating units 14 is not limited to a concentric circular form but it may be any shape surrounding the glass cullet piece feed portion 12 such as a triangle, a rectangle or an ellipse. However, in order to feed glass cullet pieces 30, 30··· supplied from the glass cullet piece feed portion 12 uniformly into flames (heating regions) 32, 32··· formed by the glass raw material particle heating units 14, 14···, the above concentric circular arrangement is preferred.

In each vessel of the melting vessel 16 and the outlet 18, a molten glass liquid G is stored, and the furnace is configured so that the molten glass liquid G produced in the melting vessel 16 flows to the downstream side through the outlet 18.

As the glass raw material particle heating unit 14, an oxygen combustion burner 34, that is an integrated device of the glass raw material particle feed portion and a heating means for forming a heating gas phase portion, is employed.

The oxygen combustion burner 34 is an oxygen combustion burner wherein supply nozzles of a raw material, a fuel and oxygen are appropriately arranged, that is known as a burner for heating inorganic powder. A nozzle 36 in the leading edge portion of the oxygen combustion burner 34 has a construction wherein a fuel supply nozzle, a gas supply nozzle for primary combustion, a glass raw material particle supply nozzle and a gas supply nozzle for secondary combustion are arranged in a concentric circular form in this order as a whole. From the nozzle 36, a flame 32 is blown downwardly and glass raw material particles are supplied from the glass raw material particle supply nozzle by air or mechanical conveyance into the flame 30. By this method, it is possible to securely melt the glass raw material particles in a short time. Here, although not shown, a raw material supply line for supplying glass raw material particles to the glass raw material particle supply nozzle, a fuel supply line for supplying a fuel to the fuel supply nozzle, and a combustion support gas supply line for supplying a combustion support gas to a combustion support gas supply nozzle for primary combustion and a combustion support gas supply nozzle for secondary combustion, are connected to the oxygen combustion burner 34.

Thus, when the oxygen combustion burner 34, that is an integrated device of the glass raw material particle feed portion and the heating means, is employed, since the oxygen combustion burner 34 functions also as the glass raw material particle feed portion, it is not necessary to provide a glass raw material particle feed portion separately. However, a glass raw material particle feed portion for feeding glass raw material particles into the flame 32 of the oxygen combustion burner 34, may be separately provided so as to be adjacent to the oxygen combustion burner 34.

Here, the gas phase heating means is not limited to the oxygen combustion burner 34, and a multiphase arc plasma generation apparatus constituted by at least one pair of electrodes for generating thermal plasma, may be provided on a ceiling wall of a melting vessel 16, or both of the oxygen combustion burner 34 and the multiphase arc plasma generation apparatus may be provided in the melting vessel 16. Further, the temperatures of the flame 32 of the oxygen combustion burner 34 and the thermal plasma are preferably set to be at least 1,600°C higher than the melting temperature of silica sand in order to quickly vaporize and dissipate gas components contained in the glass raw material particles and to promote vitrification reaction. By this method, the glass raw material particles fed in the furnace are quickly vaporized and dissipated by the flame 32 and/or the thermal plasma, and by the heat of high temperature, they become liquid glass particles and fall on the bottom portion of the melting vessel 16 to be a molten glass liquid. Then, the liquid state of the molten glass liquid formed by accumulation of the liquid glass particles is maintained because it is continuously heated by the flame 32 and/or the thermal plasma. Here, the central temperature of the flame 32 is about 2,000°C in the case of oxygen combustion, and it is from 5,000 to 20,000°C in the case of thermal plasma.

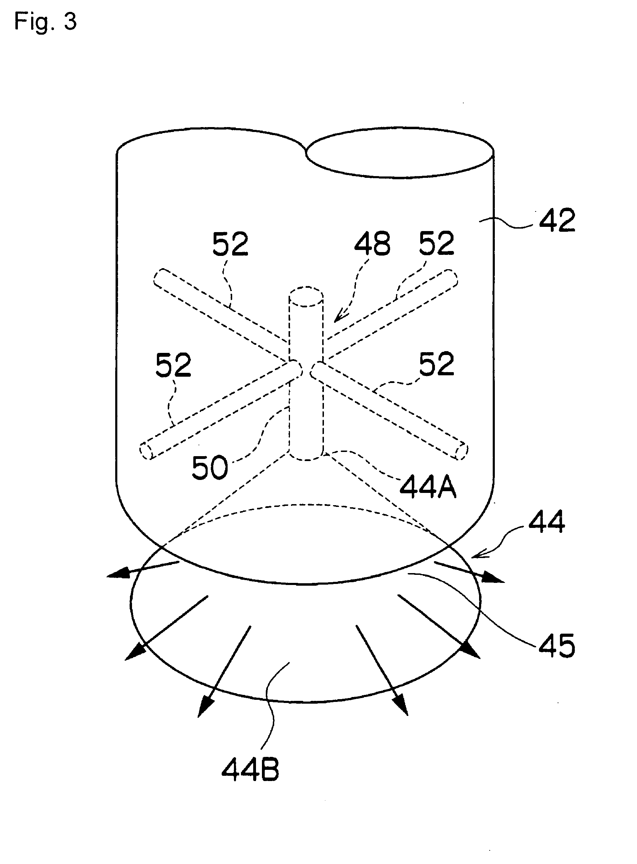

Here, in Figs. 1 and 3, particles 38 shown in flames 32 or under the flames 32 indicate liquid glass particles that have been changed from the glass raw material particles and glass raw material particles changing to the liquid glass particles. At least the particles under the flames are considered to have been changed to liquid glass particles. Hereinafter, particles 38 shown in these Figures are referred to as liquid glass particles 38.

Meanwhile, the glass cullet piece feed portion 12 has a feed means 40 for feeding glass cullet pieces 30 into the furnace. This feed means 40 is constituted by a feed tube 42, a guide member 44 and a glass cullet piece supply portion 46. The feed tube 42 is disposed so as to penetrate through the ceiling wall 20, and a guide member 44 is attached to a lower opening portion 42A of the feed tube 42. This guide member 44 is an umbrella-shaped member formed into a conical shape as shown in Fig. 3, which is disposed so that the apex portion 44A is on the upper side and is connected to the feed tube 42 by a connecting member 48 with a gas 45 allowing glass cullet pieces 30 pass therethrough. The connecting member 48 is constituted by a vertical rod 50 connected to the apex portion 44A and four horizontal rods 52, 52··· having the same lengths and connected from radially to the vertical rod 50 so as not to prevent passing of the glass cullet pieces 30 as much as possible. These four horizontal rods 52, 52··· are connected to an inner circumference of the feed tube 42, whereby the guide member 44 is connected to the feed tube 42 in a state that the central axis of the feed tube 42 agrees with the central axis of the guide member 44. In Fig. 1, the feed tube 42 protrudes toward the inside of the melting vessel 16 from the ceiling wall 20, but the feed tube 42 may be configured to share the same plane as the inner wall surface of the ceiling wall 20. The material of the feed tube 42 may, for example, be water-cooled metal or ceramics.

Further, the glass cullet piece supply portion 46 is provided for supplying glass cullet pieces 30, 30··· stored in a hopper 54 to the feed tube 42, which is constituted by an air-conveying line 60 connected to the feed tube 42, and a supply line 62 of the hopper 54 connected to the air-conveying line 60.

Sucked glass cullet pieces 30, 30··· are air-conveyed to be supplied to the feed tubes 42, and when they reach the lower opening portion 42A of the feed tube 42, they are guided by a conical surface 44B of the guide member 44 shown in Fig. 3, whereby the flow direction is changed to radial directions. Then, the glass cullet pieces 30, 30··· are spread in obliquely downward directions into eight flames 32, 32··· formed around the guide member 44. Here, the glass cullet pieces are air-conveyed in this example, but they may be mechanically conveyed. When the size of glass cullet pieces is large, the mechanical conveyance is more preferred than air-conveyance.

In the present invention, "glass cullet" means a glass cullet having substantially the same glass composition as that of glass products being the final products of the present invention. This glass cullet is usually produced in a step of producing glass products being the final products from a molten glass liquid formed in a melting furnace bottom portion in the present invention. However, the cullet is not limited thereto, and it may be a glass cullet produced in a production step of other glass products having substantially the same glass composition as that of the glass products being the final products of the present invention, or a glass cullet produced in a step of using glass products being the final products obtained by the present invention. The glass-melting furnace in the production step of other glass products, is not limited to a glass-melting furnace using in-flight glass melting method.

When the glass composition of a glass cullet is substantially the same as the glass composition of a glass produced from glass raw material particles, the glass composition of a molten glass, that is a mixture of liquid glass formed from molten glass cullet pieces and liquid glass formed from glass raw material particles, becomes uniform, thermal energy required for homogenization becomes small and a time required for homogenization becomes short. The glass composition of glass cullet and the glass composition of liquid glass particles formed from glass raw material particles are preferably the same. However, since the glass composition may slightly change (for example, e.g. evaporation of volatile glass components such as boron oxide) in the process that the molten glass liquid formed in the melting furnace bottom portion becomes glass products, such a slight difference of glass composition is acceptable.

Here, since a glass cullet is made of a material already forming a glass, heated glass cullet pieces are simply melted into liquid glass particles. On the other hand, glass raw material particles undergo chemical reactions such as a thermal decomposition of glass raw material (for example, thermal decomposition from metal carbonate to metal oxide) and a so-called vitrification consisting of a reaction and melting of constituents to be a glass, to be liquid glass particles. Although the glass raw material particles are different from glass cullet pieces in the mechanism of changing solid particles into molten glass particles, they are substantially the same in the glass composition of the produced liquid glass particles.

Next, the function of the glass-melting furnace constructed as described above will be described.

The glass-melting furnace of this embodiment is a melting furnace for melting glass raw material particles. A high-temperature gas phase portion is formed by eight oxygen combustion burners 34, 34···, and the glass raw material particles are changed into liquid glass particles 38, 38··· in this gas phase portion. Namely, from the oxygen combustion burners 34, 34···, glass raw material particles are fed into the furnace, and the falling glass raw material particles are heated by flames 32, 32··· of the oxygen combustion burners 34, 34··· to produce liquid glass particles 38, 38···. The liquid glass particles 38, 38··· fall downwardly and they are accumulated in the furnace bottom portion 64 to be a molten glass liquid G, and the molten glass liquid G is temporarily stored in the furnace bottom portion 64.

It is not essential that the liquid glass particles 38, 38··· reach the furnace bottom portion 64 or a surface of the molten glass liquid G as separate particles. Two or more liquid glass particles may be fused together in the heating gas phase before reaching the furnace bottom portion 64 or the surface of the molten glass liquid G.

The average particle size (weight-averaged) of the glass raw material particles is preferably from 30 to 1,000 µm. More preferably, glass raw material particles having an average particle size (weight-averaged) within a range of from 50 to 500 µm are employed, and glass raw material particles within a range of from 70 to 300 µm are still more preferred. The average particle size (weight-averaged) of the liquid glass particles 38, 38··· that are produced by melting the glass raw material particles, is about 80% of the average particle size of glass raw material particles in most cases.

At a time of such heating and melting the glass raw material particles, in this melting vessel 16, glass cullet pieces are spread by the feed means 40 of the glass cullet piece feed portion 12 into radially toward eight flames 32, 32··· around the glass cullet piece feed portion 12.

Namely, in the melting vessel 16, into the flames 32 for heating glass raw material particles, the glass cullet pieces are fed to carry out in-flight heating of the glass cullet pieces together with the glass raw material particles.

Here, particles 30 shown in the flames 32 and in the vicinities of the flames 32 in Figs. 1 and 3, indicate glass cullet pieces that have been already melted to be liquid glass particles or those in the process of changing to liquid glass particles. As described below, it is preferred that at least a surface of the glass cullet pieces is liquefied in the heating gas phase. Accordingly, the particles 30 in the Figures indicate solid glass cullet pieces (including those before being fed into melting vessel 16), glass cullet pieces a surface of which is liquefied, and those entirety of which is liquefied, etc. Hereinafter they are collectively referred to as glass cullet pieces 30.

Since each of the glass cullet pieces 30, 30··· fed into the flames 32 is heated by high temperature of the flames 32, each piece is sufficiently heated and the melted-portion volume ratio increases. Namely, a surface of each of the glass cullet pieces 30, 30··· is heated to be at least 1,000°C by high heat from eight flames 32, 32··· to be a viscous fluid of at most 1,000 Pa·s. It is not necessary to completely melt the glass cullet pieces 30 in-flight to have a viscosity of at most 100 Pa·s equivalent to the viscosity of molten glass liquid in the furnace by e.g. a temperature of at least 1,400°C. However, by thus feeding the glass cullet pieces 30, 30··· into eight flames 32, 32···, the melting state of the glass cullet pieces 30, 30··· becomes close to that of molten glass liquid, whereby the inhomogeneity from the liquid glass particles 38, 38··· becomes small.

It is preferred that at least a surface portion of the glass cullet pieces is liquefied before they reach the molten glass liquid in the furnace bottom, but they may reach the molten glass liquid without being liquefied.

The particle size of the glass cullet pieces fed from the glass cullet piece feed tube 42 into the melting vessel 16 is preferably specified considering flying of glass cullet pieces themselves, handling efficiency of the glass cullet pieces in recovering, storing and conveying the glass cullet pieces to the feed port. Namely, the minor diameter (a) of the glass cullet pieces is preferably 0.1 mm<a<50 mm. Selection of the glass cullet pieces having the minor diameter (a) is carried out by screening the glass cullet pieces through a sieve while changing the size of the mesh opening. Namely, the glass cullet pieces of the present invention are preferably ones remaining on a sieve having a mesh opening of 0.1 mm and passing through a sieve having a mesh opening of 50 mm. The minor diameter (a) is preferably 0.5 mm<a<30 mm from the viewpoint of the handling of the glass cullet pieces. The minor diameter (a) is more preferably 5 mm<a<20 mm from the viewpoint of the handling of the glass cullet pieces.

Further, the surface of the molten glass liquid G at a position to which the glass cullet pieces 30, 30··· fall, is a portion having the highest temperature in the furnace by high heat from the flames 32, 32··· and radiation heat from the furnace wall, and accordingly, even if the melt portion volume ratio is low, the glass cullet pieces 30, 30··· are efficiently melted.

Further, since the glass raw material particles are melted by the flames 32, 32··· together with the glass cullet pieces 30, 30···, the liquid glass particles 38, 38··· are mixed with heterogeneous glass cullet pieces 30, 30··· in the heating gas phase, and the mixed molten material falls toward the surface of the molten glass liquid G.

At least two of the glass particles, that are glass cullet pieces at least the surface of which is liquefied by the glass raw material particle heating unit 14, may be fused together before reaching a surface of molten glass liquid G, and the fused together particles may reach the molten glass liquid G. Since the glass particles at least the surface of which is liquefied are relatively large particles, falling liquefied glass particles tend to contact each other, and a plurality of liquefied glass particles contact to be fused together to form further large liquefied glass particles or agglomerations. Further, a large number of liquefied glass particles may form a single stream of fluid before reaching the molten glass liquid G.

By the way, as described above, it is preferred that the glass cullet pieces 30 are completely liquefied by the high temperature of the flames 32 during fall of the glass cullet pieces 30, but since the glass cullet pieces 30 are by far larger than the liquid glass particles 38 being fine particles in the size, it is difficult to completely liquefy the glass cullet pieces 30. Namely, if a large amount of glass cullet pieces 30, 30··· are continuously supplied to the flames 32, 32···, glass cullet pieces 30, 30··· having low melt portion volume ratio are accumulated in a particular region of the molten glass liquid G, whereby the melting efficiency decreases to cause deterioration of homogeneity. In order to solve this problem, it is preferred to feed the glass cullet pieces 30 intermittently and/or so as to spread spatially.

For this purpose, when the amount of glass cullet pieces per a unit time is large, it is preferred to supply the glass cullet pieces 30, 30··· to the flames 32, 32··· intermittently and simultaneously, so as to make the feeding time of the glass cullet pieces 30 intermittently.

Namely, when the glass cullet pieces 30 are supplied intermittently from the glass cullet piece feed portion 46 to the feed tube 42, the glass cullet pieces 30, 30··· are supplied to the flames 32, 32··· intermittently and simultaneously, whereby it is possible to prevent retention of the glass cullet pieces 30, 30··· in a particular region of the molten glass liquid G and thereby further to maintain the homogeneity of the molten glass liquid G.

As described above, it is not necessary to completely liquefy the glass cullet pieces 30 in the heating gas phase portion by the glass raw material particle heating unit. However, by thus arranging a plurality of oxygen combustion burners 34, 34···, the melting ratio of the glass cullet pieces 30 improves, and it is possible to reduce heat amount required for secondary heating for homogenizing molten glass liquid. Further, by increasing the number of oxygen combustion burners 34, it becomes possible to uniformly heat the glass cullet pieces 30, 30··· and thereby to further increase the melting ratio. Here, when the number of oxygen combustion burners 30 is large, each of the oxygen combustion burners 30 may be ones of small-capacity type. By this construction, it is possible to save the fuel to be used for each oxygen combustion burner 30.

Accordingly, in this glass-melting furnace, it is possible to feed and melt the glass cullet pieces 30 in the melting vessel 16 while maintaining the homogeneity. Accordingly, since it is possible to efficiently use glass raw material particles and glass cullet pieces in combination, the glass-melting furnace is suitable as a large-scale melting furnace for producing at least tens of tons per day or at least hundreds of tons per day of glass products.

Further, the oxygen combustion burners 34 do not simply preheat the glass cullet pieces 30 alone, but heat glass raw material particles 38 and molten glass liquid G in the melting vessel 16, and accordingly, the oxygen combustion burners are completely different in the function from a pre-heating unit for glass cullet pieces disposed outside the furnace.

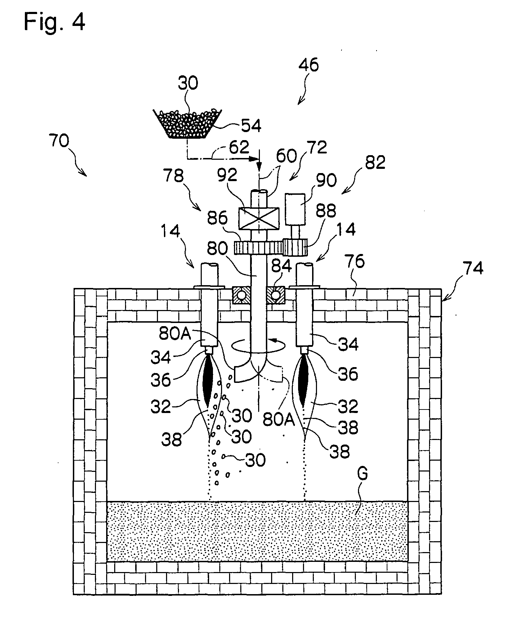

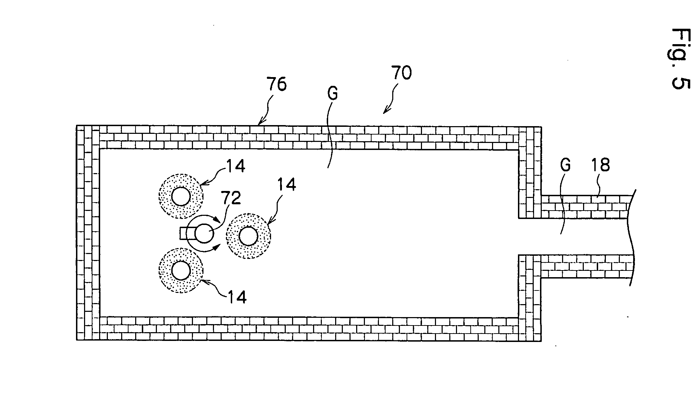

Fig. 4 is a vertical cross-sectional view of a glass-melting furnace 70 of a second embodiment constituting the glass-melting furnace of the present invention, and Fig. 5 is a substantial-part horizontal cross-sectional view of the glass-melting furnace 70. Members the same or similar to those of the glass-melting furnace 10 shown in Figs. 1 and 2 are designated as the same symbols, and their explanations are omitted.

The glass-melting furnace 70 has one glass cullet piece feed portion 72 and three glass raw material particle heating units 14, 14···, and they are provided downwardly through a ceiling wall 76 of a melting vessel 74. Further, the three glass raw material particle heating units 14, 14··· are disposed on a concentric circle around the glass cullet pieces feed portion 72 at equal interval, but the arrangement is not limited to a concentric circle and the number is not limited to three. Further, the glass cullet piece feed portion 72 is provided with a feed means 78.

This feed means 78 is constituted by a feed tube 80 having a feed port having an opening at a predetermined angle to the vertical direction, a rotation means for rotating the feed tube 80 around the vertical direction as the rotation axis, and a glass cullet piece supply portion 46.

The feed tube 80 is provided in the vertical direction through the ceiling wall 76, so as to be rotational around the vertical axis by a bearing 84 attached to the ceiling wall 76. A lower portion of the feed tube 80 is curved into substantially horizontal direction, and its end portion forms a feed port 80A. Further, a gear 86 is provided on the outer circumference of a portion of the feed tube 80 outside the furnace, the gear 86 is engaged with a gear 88, and the gear 88 is connected with an output shaft of a motor 90. Accordingly, when the motor 90 is driven, the rotation is propagated through the gears 88 and 86 to the feed tube 80, whereby the feed tube 80 is rotated around the vertical axis with a predetermined rotation speed. Further, the upper end portion of the feed tube 80 is connected to an air-conveying line 60 of the glass cullet piece supply portion 46 via a rotary joint 92.

In the feed means 78 having such a construction, when the motor 90 is rotated, the above-described glass cullet pieces 30, 30··· stored in a hopper 54 is air-conveyed to be supplied to the feed tube 80, and the feed tube 80 is rotated. Accordingly, since the glass cullet pieces 30, 30··· are supplied to the rotating feed tube 80, the pieces are sequentially thrown toward three flames 32, 32··· from the feed port 80A by air-conveying force, the gravity or centrifugal force etc. Namely, when the feed tube 80 is rotated by the motor 90, the glass cullet pieces 30, 30··· are thrown toward a first flame 32 facing to the feed port 80A, and when the feed tube 80 is rotated, the glass cullet pieces are sequentially thrown to subsequent flames 32. By this operation, the glass cullet pieces 30 are sequentially thrown to the flames 32, 32···, whereby the feed of the glass cullet pieces 30 is spatially distributed and glass cullet pieces 30 are intermittently supplied to each flame 32. Accordingly, with this melting vessel 74, since the feed of the glass cullet pieces 30 is spatially distributed and intermittent, it is possible to further prevent retention of the glass cullet piece 30, 30··· in a specific region of a molten glass liquid G, and to further maintain the homogeneity of the molten glass liquid G.

Here, Fig. 4 shows a feed tube 80 having one feed port 80A formed in the tube, but the number of feed ports 80A may be two or more. Namely, by forming a lower portion of the feed tube 80 to have a double-forked shape or a triple-forked shape, the number of feed ports 80A can be increased.

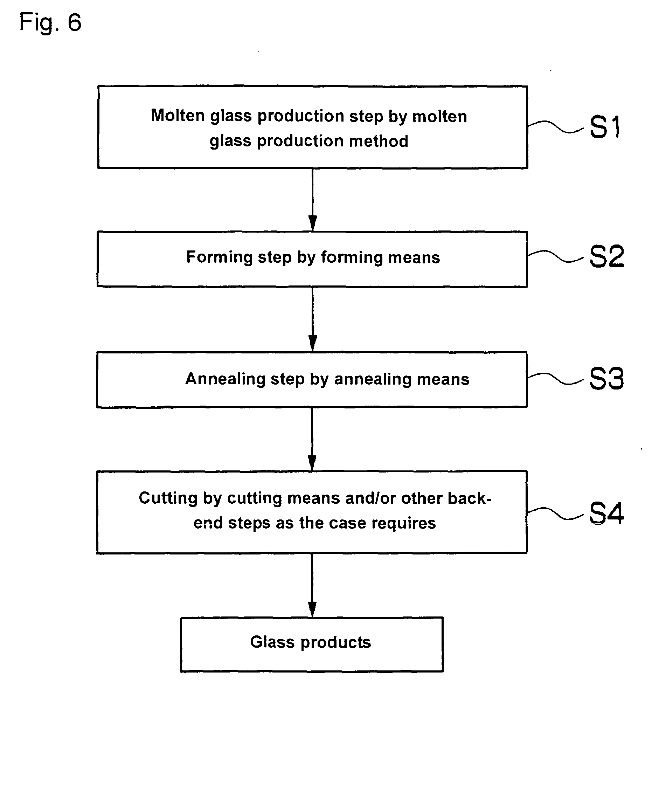

Fig. 6 is a flowchart showing the embodiment of the process for producing glass products. Fig. 6 shows constituent features of the process for producing glass products, that are a glass melting step (S1), a forming step (S2) by a forming means, an annealing step (S3) by an annealing means, and a cutting step and other back-end steps (S4) to be carried out as the case requires.

A molten glass liquid G produced in the melting vessel 16 or 76 shown in Figs. 1 to 5 is conveyed through an outlet and a conduit structure, not shown, to a forming means and is formed (forming step). The formed glass is annealed by an annealing means (annealing step) to prevent residual stress from remaining inside a solidified glass after formation. Further, the glass is cut (cutting step) and subjected to other back-end steps as the case requires, to be glass products.

For example, in a case of plate glass, the molten glass liquid G is formed into a glass ribbon by a forming means, it is annealed by an annealing means and cut into a desired size, and is subjected to a back-end step such as a grinding step of glass ends to obtain a plate glass.

The molten glass G produced by the process for producing molten glass of the present invention, is not limited in the composition so long as the molten glass is one produced by in-flight heating melting method. Accordingly, it may be soda lime glass or borosilicate glass. Further, the application of the glass products to be produced is not limited to architecture and vehicle applications, and it may be flat panel display application or other various types of applications.

In a case of soda lime glass to be used for a plate glass for architecture or vehicle application, the glass preferably has a composition that SiO₂ : 65 to 75%, Al₂O₃ : 0 to 3%, CaO: 5 to 15%, MgO: 0 to 15%, Na₂O: 10 to 20%, K₂O: 0 to 3%, Li₂O: 0 to 5%, Fe₂O₃: 0 to 3%, TiO₂: 0 to 5%, CeO₂: 0 to 3%, BaO: 0 to 5%, SrO: 0 to 5%, B₂O₃: 0 to 5%, ZnO: 0 to 5%, ZrO₂: 0 to 5%, SnO₂: 0 to 3%, and SO₃: 0 to 0.5% in terms of mass percentage of oxide.

In a case of alkali-free glass to be employed for a substrate of liquid crystal display, the glass preferably has a composition that SiO₂: 39 to 70%, Al₂O₃: 3 to 25%, B₂O₃ : 1 to 20%, MgO: 0 to 10%, CaO: 0 to 17%, SrO: 0 to 20% and BaO: 0 to 30% in terms of mass percentage of oxide.

In a case of mixed alkali glass to be employed for a substrate for plasma display, the glass preferably has a composition that SiO₂: 50 to 75%, Al₂O₃: 0 to 15%, MgO+CaO+SrO+BaO+ZnO: 6 to 24% and Na₂O+K₂O: 6 to 24% in terms of mass percentage of oxide.

As another application, in a case of a borosilicate glass to be used for e.g. a heat-resistant container or laboratory equipment, the glass preferably has a composition that SiO₂: 60 to 85%, Al₂O₃: 0 to 5%, B₂O₃: 5 to 20% and Na₂O+K₂O: 2 to 10% in terms of mass percentage of oxide.

In this embodiment, explanation has been made under an assumption that the glass raw material particle heating unit and the glass cullet piece feed portion are disposed downwardly in vertical direction, but the construction is not limited thereto, and they may be disposed obliquely so long as they are disposed downwardly.

In this embodiment, explanation has been made under an assumption that both of the glass raw material heating unit and glass cullet piece feed portion are provided in the ceiling portion of the glass-melting furnace, but the construction is not limited thereto, and it is sufficient that both of them are present in a furnace wall portion in the upper portion of the glass-melting furnace. For example, the construction may be such that the glass cullet piece feed portion is provided in the ceiling portion of the glass-melting furnace and the glass raw material heating unit is provided in the side wall portion of the glass-melting furnace.

In this embodiment, explanation has been made under an assumption that the ceiling surface of the melting vessel has a flat shape, but the construction is not limited thereto, and it may have an arch shape, a dome shape, etc.

Further, in this embodiment, explanation has been made with respect to a glass-melting furnace having one group consisting of a glass cullet piece feed portion and a plurality of glass raw material particle heating units disposed therearound, but a plurality of such groups may be provided in the glass-melting furnace. For example, Figs. 2 and 5 each shows a glass-melting furnace 10 having one group consisting of a glass cullet piece feed portion 12 (72) and a plurality of glass raw material particle heating units 14, 14···, but the construction is not limited thereto, and at least two such groups may be provided in the glass-melting furnace.

### INDUSTRIAL APPLICABILITY

Molten glass produced by the present invention is formed into various types of glass products by a forming means such as a float bath, a fusion forming machine, a roll out forming machine, a blow forming machine or a press molding machine.

The entire disclosure of Japanese Patent Application No. 2009-174324 filed on July 27, 2009 including specification, claims, drawings and summary is incorporated herein by reference in its entirety.

### REFERENCE SYMBOLS

10···glass-melting furnace, 12···glass cullet piece feed portion, 14···glass raw material particle heating unit (glass raw material particle feed portion and heating unit for forming high-temperature gas phase portion), 16···melting vessel, 17···side wall, 18···outlet (discharge portion), 20···ceiling wall, 30···glass cullet piece, 32···flame, 34···oxygen combustion burner (heating means), 36···nozzle, 38···liquid glass particle, 40···feed means, 42···feed tube, 44···guide member, 46···glass cullet piece supply portion, 48···connecting member, 50···vertical rod, 52···horizontal rod, 54···hopper, 60···air-conveying line, 62···supply line, 64···furnace bottom portion, 70···glass-melting furnace, 72···glass cullet piece feed portion, 74···melting vessel, 76···ceiling wall, 78···feed means, 80···feed tube, 82···rotation means, 84···bearing, 86···gear, 88···gear, 90···motor, 92···rotary joint

## Claims

1. A glass-melting furnace for changing glass raw material particles into liquid glass particles in a gas phase atmosphere in the glass-melting furnace, accumulating the liquid glass particles in a bottom portion of the glass-melting furnace to obtain a molten glass liquid and discharging the molten glass liquid;
the glass-melting furnace comprising a glass cullet piece feed portion disposed so as to penetrate through a ceiling portion of the glass-melting furnace;
a plurality of glass raw material particle feed portions disposed around the glass cullet piece feed portion in plan view so as to be disposed downwardly from a furnace wall portion in an upper portion of the glass-melting furnace;
a heating means provided for each of the plurality of glass raw material particle feed portions and for forming a gas phase portion under the glass raw material particle feed portion to change the glass raw material particles into liquid glass particles;
a furnace bottom portion for accumulating the liquid glass particles to form a molten glass liquid; and
a discharge portion for discharging the molten glass liquid;
wherein the glass cullet piece feed portion includes a feed means for feeding the glass cullet pieces so as to spread the pieces radially toward the gas phase portion.

2. The melting furnace according to Claim 1, wherein the feed means has an feed tube, and a guide member having a conical shape, the guide member being connected to a lower opening of the feed tube with a gap so that glass cullet pieces can pass through the gap and being disposed so that the apex of the guide member is on the upper side.

3. The glass-melting furnace according to Claim 1, wherein the feed means has an feed tube having a feed port opening with a predetermined angle to the vertical direction, and a rotation means for rotating the feed tube around the vertical direction as the rotation axis.

4. The glass-melting furnace according to any one of Claims 1 to 3, wherein the plurality of glass raw material feed portions are disposed along a concentric circle around the glass cullet piece feed portion in plan view.

5. The glass-melting furnace according to any one of Claims 1 to 4, wherein the heating means is at least one of an oxygen combustion burner producing an oxygen combustion flame and a multi-phase arc plasma generation apparatus constituted by at least a pair of electrodes producing thermal plasma.

6. A process for producing molten glass, which is a process for producing a molten glass by employing the glass-melting furnace as defined in any one of Claims 1 to 5.

7. An apparatus for producing glass products, which comprises the glass-melting furnace as defined in any one of Claims 1 to 5, a forming means for forming the molten glass disposed on the downstream side of the discharge portion of the glass-melting furnace, and an annealing means for annealing a formed glass.

8. A process for producing glass products, which comprises a step of producing molten glass by the process for producing molten glass as defined in Claim 6, and a step of annealing a formed glass.
